# EUROPEAN PATENT APPLICATION

(11) **EP 2 472 417 A1**
(43) Date of publication of application: **04.07.2012**
(21) Application number: 10836989.3
(22) Date of filing: 20.10.2010
(51) Int. Cl.: G06F 17/30

(54) **METHOD AND DEVICE FOR ACCESSING FILE RESOURCES**

(30) Priority: 16.12.2009 CN 200910252773
(71) Applicant: ZTE Corporation, Shenzhen, Guangdong 518057 (CN)
(72) Inventor: ZHANG, Lian, Guangdong 518057 (CN)
(74) Representative: Schröer, Gernot H.
(86) International application number: PCT/CN2010/077920
(87) International publication number: WO 2011/072552

(57) **Abstract**

A device and a method for accessing file resources are provided. The device includes a file resource storage unit, an information storage unit, an access interface unit, and an operation interface unit, wherein the file resource storage unit is configured to store all file resources in a file system; the information storage unit is configured to store the corresponding relationships between the identifiers and storage location information of all the file resources in the file resource storage unit; the access interface unit is configured to receive a file resource access request and obtain the storage location information of a file resource to be accessed from the corresponding relationships stored in the information storage unit according to the file resource access request; the operation interface unit is configured to locate the file resource to be accessed from the file resource storage unit according to the storage location information acquired by the access interface unit, and read the file resource to be accessed.

## Description

### Technical Field

The present invention relates to the field of mobile communications, and more especially, to a method and a device for accessing file resources.

### Background of the Related Art

Currently, the file resources in the mobile terminal have become increasingly diverse. With the increase of the file resources, the file resources are accessed more and more frequently, and their maintenance is becoming increasingly complicated. At present, the main method for accessing the file resources in the mobile terminal comprises: when it needs to access a file resource in the file system, directly inputting the path information (such as the absolute path) of the file resource, that requires accessing, into the file resource access interface, and then locating the file resource that requires accessing in the file system according to the input path information.

Although using the existing access method can quickly access the file resources, since the path information of the file resource that requires accessing needs to be input when accessing the file resources, using the existing file resource access method has the following technical defects: when a file resource in the file system requires modifying as a new file resource or the file resource requires moving to another storage location (the storage location information of the resource file changes), developers need to change the absolute path of the file resource in the code so as to use the file resources correctly in the subsequent process, and therefore, the existing technology has the problem that maintaining the path information of the file resources is relatively complicated and has a lower efficiency.

### Summary of the Invention

The embodiment of the present invention provides a method and a device for accessing file resources to simplify the procedure of maintaining file resources in a mobile terminal and to improve the efficiency of maintaining the file resources.

The present invention provides a device for accessing file resources, and the device comprises a file resource storage unit, an information storage unit, an access interface unit and an operation interface unit, wherein:
the file resource storage unit is configured to store all file resources in a file system;
the information storage unit is configured to store corresponding relationships between identifiers and location storage information of all the file resources in the file resource storage unit;
the access interface unit is configured to receive a file resource access request and acquire the storage location information of a file resource to be accessed from the corresponding relationships stored in the information storage unit according to the file resource access request;
the operation interface unit is configured to locate the file resource to be accessed from the file resource storage unit according to the storage location information obtained from the access interface unit, and read the file resource to be accessed.

Preferably, the information storage unit is configured to store the corresponding relationships with a following way: establishing a file resource information list and storing the corresponding relationships in the file resource information list.

Preferably, the file resource access request includes the identifier information of the file resource to be accessed;
the access interface unit is configured to obtain the storage location information with a following way: acquiring the storage location information of the file resource to be accessed from the corresponding relationships stored in the information storage unit according to the identifier information of the file resource to be accessed.

Preferably, the access interface unit is also configured to: send a notification message to indicate that the file resource to be accessed does not exist to a sending party of the file resource access request when the storage location information of the file resource to be accessed cannot be acquired from the corresponding relationship stored in the information storage unit.

Preferably, the device also comprises an information editing unit;
the information editing unit is configured to update the corresponding relationship stored in the information storage unit when a file resource in the file resource storage unit changes.

Preferably, the information editing unit is configured to update the corresponding relationships stored in the information storage unit with a following way:
when the storage location of a file resource in the file resource storage unit changes, the information editing unit modifying the storage location information of the file resource whose storage location stored in the information storage unit changes;
when deleting a file resource in the file resource storage unit, the information editing unit deleting the identifier and the storage location information of the deleted file resource stored in the information storage unit;
when adding a new file resource in the file resource storage unit, the information editing unit adding the corresponding relationship between the identifier and the storage location information of the new file resource into the information storage unit.

Preferably, the information editing unit is a text editor or a code editor.

The present invention further provides a method for accessing file resources, comprising:
acquiring storage location information of a file resource to be accessed from stored corresponding relationships between storage location information and identifiers of all file resources according to a received file resource access request; and
locating the file resource to be accessed based on the acquired storage location information, and reading the file resource to be accessed.

Preferably, the method also comprises: storing the corresponding relationships between the storage location information and the identifiers of all the file resources with a following way: establishing a file resource information list and storing the corresponding relationships into the file resource information list.

Preferably, the method also comprises: sending a notification message to indicate that the file resource to be accessed does not exist to a sending of the file resource access request when the storage location information of the file resource to be accessed cannot be acquired.

Preferably, the method also comprises: updating the stored corresponding relationship when a file resource changes.

Preferably, the step of updating the stored corresponding relationship comprises:
when the storage location of a file resource changes, modifying the storage location information of the file resource whose storage location changes;
when a file resource is deleted, deleting the identifier and the storage location information of the deleted file resource;
when a new file resource is added, adding the corresponding relationship between the identifier and the storage location information of the new file resource.

In the embodiment of the present invention, the information storage unit stores the corresponding relationships between the identifiers of all the file resources and the storage location information of the file resources in the file system; when the access interface unit receives a file resource access request, it acquires the storage location information of the file resource to be accessed from the corresponding relationship according to the file resource access request; the operation interface unit locates the file resource to be accessed in the file system according to the storage location information of the file resource to be accessed acquired by the access interface unit, and reads the file resource. With the technical scheme of the present invention, since the corresponding relationships between the identifiers of all the file resources and the storage location information of the file resources in the file system are stored, in the subsequent file resource information maintenance process, if the file resource storage unit is updated, the information stored in the information storage unit is also updated accordingly, thus simplifying the maintenance procedure and the maintenance efficiency of the file resource information.

### Brief Description of Drawings

- FIG. 1: is a structural diagram of a device used for accessing file re- sources of a mobile terminal in accordance with an embodi- ment of the present invention;
- FIG. 2: is a flow chart of a method that uses the device shown in FIG. 1 to access file resources in accordance with an embodiment of the present invention.

Preferred Embodiments of the Present Invention

The embodiments of the present invention will be described in further detail in the following with combination of the accompanying drawings.

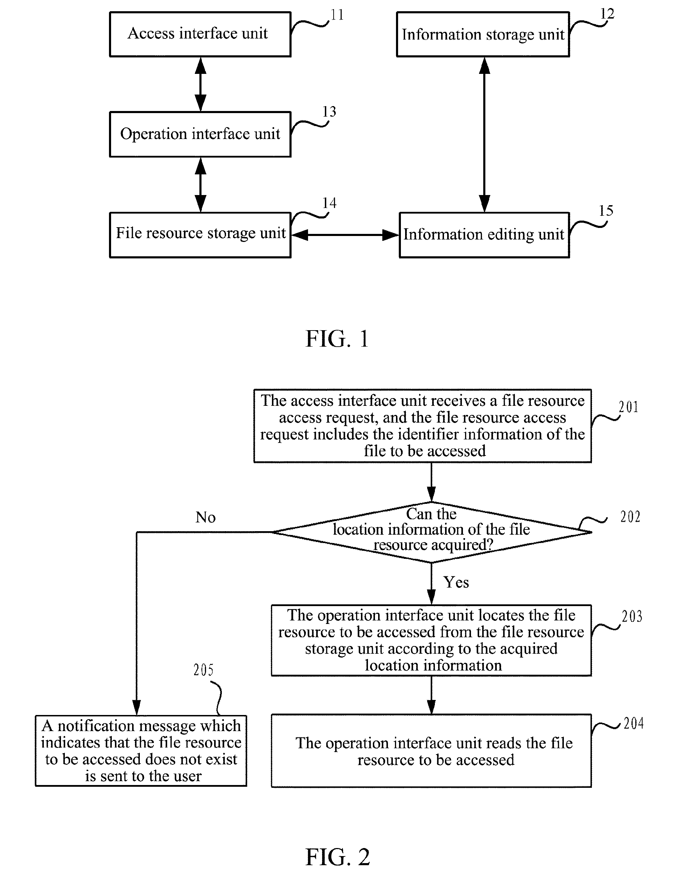

Refer to FIG. 1, which is a structural diagram of a device used for accessing the file resources of a mobile terminal in accordance with an embodiment of the present invention, and the device comprises the access interface unit 11, the information storage unit 12, the operation interface unit 13 and the file resource storage unit 14.

The access interface unit 11 is configured to receive a file resource access request which includes the identifier information of the file resource to be accessed; and acquire the storage location information of the file resource to be accessed from the information storage unit 12 according to the identifier information in the file resource access request.

The access interface unit 11 in the embodiment of the present invention might be the existing interface in the access interface layer.

The information storage unit 12 is configured to store the identifier information (it could be any identifier as long as the identifier can be used to uniquely identify the file resource, such as the file resource number, name, and so on) and the storage location information (such as the absolute paths of file resources stored in the file resource storage unit 14) of all the file resources in the mobile terminal.

In the embodiment of the present invention, a file resource information list is established in the information storage unit 12. The file resource information list stores the corresponding relationships between the identifier information of all the file resources in the mobile terminal and the storage location information of the file resources; the file resource information list might be implemented in the form of files or static arrays in the C language, and the identifier of the file resource might be identified with the subscript of the location where the information of the file resource is located in the array. The embodiments of the present invention are not limited to the method of storing the corresponding relationships between the identifier information of the file resources and the storage location information of the file resources by establishing the list, or other methods can be used to store the corresponding relationships, such as by establishing a mapping table, and so on.

The operation interface unit 13 is configured to locate the file resource to be accessed stored in the file resource storage unit 14 according to the location information of the file resource to be accessed obtained by the access interface unit 11 from the information storage unit 12, and to read the file resource to be accessed which is stored in the format of a file.

The operation interface unit 13 in the embodiment of the present invention might be the existing interface in the operation interface layer.

The file resource storage unit 14 is configured to store the file resources in the form of files.

In the embodiment of the present invention, the file resource storage unit 14 might be an existing file resource storage database.

Preferably, to further ensure that the information stored in the information storage unit 12 can be updated and to facilitate the subsequent file resource access, and the aforementioned device in the embodiment of the present invention also comprises the information editing unit 15, wherein:
the information editing unit 15 is configured to perform accordingly update of the information stored in the information storage unit 12 when modifying, adding or deleting the file resources in the file resource storage unit 14.

When the path information of a file resource in the file resource storage unit 14 changes, the information editing unit 15 modifies the storage location information of the file resource whose path information stored in the information storage unit 12 changes; when a file resource in the file resource storage unit 14 is deleted, the information editing unit 15 deletes the storage location information of the deleted file resource stored in the information storage unit 12; when a file resource is added in the resource file storage unit 14, the information editing unit 15 adds a record in the information storage unit 12, and the record includes the identifier information and the storage location information of the added file resource.

The information editing unit 15 in the embodiment of the present invention might be implemented with a separate device, such as the existing text editor or code editor, and so on.

To describe the technical scheme of the present invention more clearly and in more detail, in the following, the procedure of the method for accessing the resource file in the mobile terminal using the device shown in FIG. 1 is used to describe the technical scheme of the present invention in detail, and the method procedure is shown in FIG. 2.

Refer to FIG, 2, which is a flow chart of the method for accessing the file resources in accordance with the embodiment of the present invention, and the procedure comprises following steps.

In step 201, the access interface unit 11 receives a file resource access request including the identifier information of the file resource to be accessed.

In step 202, the access interface unit 11 acquires the storage location information of the file resource to be accessed from the information list in the information storage unit 12 according to the file resource access request, and if the location information of the file resource to be accessed is acquired, step 203 is performed, otherwise step 205 is performed.

In step 203, the operation interface unit 13 locates the file resource to be accessed stored in the file resource storage unit 14 according to the storage location information of the file resource to be accessed obtained from the access interface unit 11.

In step 204, the operation interface unit 13 reads the file resource to be accessed.

In step 205, the access interface unit returns a notification message which indicates that the file resource to be accessed does not exist to the sending party of the file resource access request.

In this embodiment of the present invention, with respect to all the file resources in the file system, a file resource information list is established to store the corresponding relationship between the identifier information of all the file resources stored in the file resource information list and the absolute path information stored in the file system. When it needs to access a file in the file system (the file resource that needs to be accessed is called as the file resource to be accessed), it only needs to acquire the storage location information of the file resource to be accessed from the file resource information list, that is, the file resource to be accessed stored in the form of files can be located, and when maintaining the file resource, if the storage location information of a file resource needs to be updated since the file resource is modified, deleted or added for the file system file, it is only required to modify the information stored in the list rather than modifying the codes to update the path information of the file resource as what it is in the prior art, and therefore, with the technical scheme of the present invention, the procedure of maintaining the storage location information of the file resource can be simplified, thus improving the efficiency of maintaining the file resource.

Of course, the present invention might also have a variety of other embodiments, without departing from the spirit and essence of the present invention, those skilled in the field can make all kinds of appropriate changes and variations according to the present invention, and the corresponding changes and variations should also fall into the protection scope of the claims appended in the present invention.

### Industrial Applicability

Compared with the prior art, since the corresponding relationships between the identifiers of all the file resources in the file system and the storage location information of all the file resources are stored in the present invention, in the subsequent file resource information maintenance process, if the file resource storage unit is updated, the information stored in the information storage unit is also updated accordingly, thus simplifying the maintenance procedure of the file resource information and improving the maintenance efficiency.

## Claims

1. A device for accessing file resources, comprising a file resource storage unit, an information storage unit, an access interface unit and an operation interface unit, wherein:
the file resource storage unit is configured to store all file resources in a file system;
the information storage unit is configured to store corresponding relationships between identifiers and location storage information of all the file resources in the file resource storage unit;
the access interface unit is configured to receive a file resource access request and acquire the storage location information of a file resource to be accessed from the corresponding relationships stored in the information storage unit according to the file resource access request;
the operation interface unit is configured to locate the file resource to be accessed from the file resource storage unit according to the storage location information obtained from the access interface unit, and read the file resource to be accessed.

2. The device of claim 1, wherein the information storage unit is configured to store the corresponding relationships with a following way: establishing a file resource information list and storing the corresponding relationships in the file resource information list.

3. The device of claim 1, wherein,
the file resource access request includes the identifier information of the file resource to be accessed;
the access interface unit is configured to obtain the storage location information with a following way: acquiring the storage location information of the file resource to be accessed from the corresponding relationships stored in the information storage unit according to the identifier information of the file resource to be accessed.

4. The device of claim 1, wherein the access interface unit is also configured to: send a notification message to indicate that the file resource to be accessed does not exist to a sending party of the file resource access request when the storage location information of the file resource to be accessed cannot be acquired from the corresponding relationship stored in the information storage unit.

5. The device of any one of claims 1 to 4, wherein the device also comprises an information editing unit;
the information editing unit is configured to update the corresponding relationship stored in the information storage unit when a file resource in the file resource storage unit changes.

6. The device of claim 5, wherein the information editing unit is configured to update the corresponding relationships stored in the information storage unit with a following way:
when the storage location of a file resource in the file resource storage unit changes, the information editing unit modifying the storage location information of the file resource whose storage location stored in the information storage unit changes;
when deleting a file resource in the file resource storage unit, the information editing unit deleting the identifier and the storage location information of the deleted file resource stored in the information storage unit;
when adding a new file resource in the file resource storage unit, the information editing unit adding the corresponding relationship between the identifier and the storage location information of the new file resource into the information storage unit.

7. The device of claim 5, wherein the information editing unit is a text editor or a code editor.

8. A method for accessing file resources, comprising:
acquiring storage location information of a file resource to be accessed from stored corresponding relationships between storage location information and identifiers of all file resources according to a received file resource access request; and
locating the file resource to be accessed based on the acquired storage location information, and reading the file resource to be accessed.

9. The method of claim 8, also comprising: storing the corresponding relationships between the storage location information and the identifiers of all the file resources with a following way: establishing a file resource information list and storing the corresponding relationships into the file resource information list.

10. The method of claim 8, also comprising: sending a notification message to indicate that the file resource to be accessed does not exist to a sending of the file resource access request when the storage location information of the file resource to be accessed cannot be acquired.

11. The method of any one of claims 8 to 10, also comprising:
updating the stored corresponding relationship when a file resource changes.

12. The method of claim 11, wherein the step of updating the stored corresponding relationship comprises:
when the storage location of a file resource changes, modifying the storage location information of the file resource whose storage location changes;
when a file resource is deleted, deleting the identifier and the storage location information of the deleted file resource;
when a new file resource is added, adding the corresponding relationship between the identifier and the storage location information of the new file resource.
